# EUROPEAN PATENT SPECIFICATION

(11) **EP 0 704 606 B1**
(45) Date of publication and mention of the grant of the patent: **24.01.2001**
(21) Application number: 95850151.2
(22) Date of filing: 31.08.1995
(51) Int. Cl.: F01N 3/28, B01J 35/06, B01D 53/88

(54) **A reactor for catalytic purification of exhaust gas**
Reaktor zur katalytischen Reinigung von Abgasen
Réacteur pour la purification catalytique de gaz d'échappement

(30) Priority: 05.09.1994 SE 9402966
(43) Date of publication of application: 03.04.1996
(73) Proprietor: ABB FLÄKT AB, S-120 86 Stockholm (SE)
(72) Inventor: Götmalm, Örjan, S-430 41 Kullavik (SE)
(74) Representative: Roth, Ernst Adolf Michael

(56) References cited:
- GB-A- 2 047 562
- US-A- 4 238 455
- US-A- 4 849 185
- FRENCH M.: "Design for Engineers", 1985, SPRINGER VERLAG, UK

## Description

### TECHNICAL FIELD

The present invention relates to a reactor chamber for catalytic cleaning of exhaust gases from a combustion plant, which chamber comprises side walls and end walls with inlet- and outlet openings respectively, and support surfaces for blocks of a ceramic catalytic material, which support surfaces are oriented across a longitudinal axis extending between the inlet and the outlet, wherein adjacent side walls form corners and the chamber is put together by a number of individual sections.

Such a reactor is known from document GB-A-2 047 562.

### BACKGROUND OF THE INVENTION

Reconstruction and modernization of vessels sometimes involves installation of a reactor for catalytic cleaning of exhausts from the propulsion motors of the vessel. The catalytic reactor will normally be installed inside a funnel shaft or in the engine room. Normally, there is very little space for such installations.

Because there are very high demands upon the welding, it is advantageous if the production of the catalytic reactor, which preferably is manufactured from stainless steel, at least for essential parts, can be performed rationally by pre-production inside a workshop.

It is also desirable that the installation is realized quickly and rationally, so that the vessel do not have to be taken out of service for a long period. Because of the above described reasons, it is not practical to build the reactor on location inside the vessel.

However, it is seldom possible to complete the reactor entirely inside a workshop and then instal the complete unit into the vessel, because the reactor unit is too voluminous to be inserted into the vessel structure, without extensive work to create an installation access-way, which afterwards has to be restored, if this is possible at all.

Therefore, it has been suggested to produce the reactor in a small number of sections of suitable size to enable the transport into the installation site inside the vessel. Thus the completion of the installation of the reactor may be performed rapidly within the vessel, e.g. by means of screw joints.

However, the problems of providing a reactor which is simple to instal, and which fulfils the requirements regarding tightness both against external leakage via the joints of the reactor, and against internal leakage between the reactor walls and the monolithic blocks located between the walls, have so far not been solved. In the first case, the work environment of the vessel is affected, and in the latter case the efficiency of the reactor is reduced. A contributing factor to these difficulties to achieve tightness in a reactor chamber built up of several different sections, is that stainless steel which has to be used to avoid problems with corrosion, has a considerably higher coefficient of thermal expansion than common steel.

### THE TECHNICAL PROBLEM

One object of the present invention is to provide a leakage free reactor chamber which can withstand temperatures up to 500 °C and which is simple to assemble from a small number of sections.

### THE SOLUTION

For this purpose, the apparatus according to the invention is characterized in that each side wall is provided with a joint which extends in parallel with said longitudinal axis, and that the end walls are provided with joints extending between the joints of the side walls and the respective inlet and outlet openings.

Because of this design of the reactor chamber, it will be possible to achieve a small cross section in split condition, with a minimum amount of parts and sealing surfaces. Also, the weight can be reduced.

If the reactor is designed so that it comprises four sections, these may form four completely uniform quadrants. This facilitates production and reduces the costs. Also, the design is stiff, while it also allows for a free thermal expansion. The partitioned support surfaces also implies several advantages in comparison with unsectioned support surfaces, e.g. space is created for thermal insulation.

### DESCRIPTION OF THE DRAWINGS

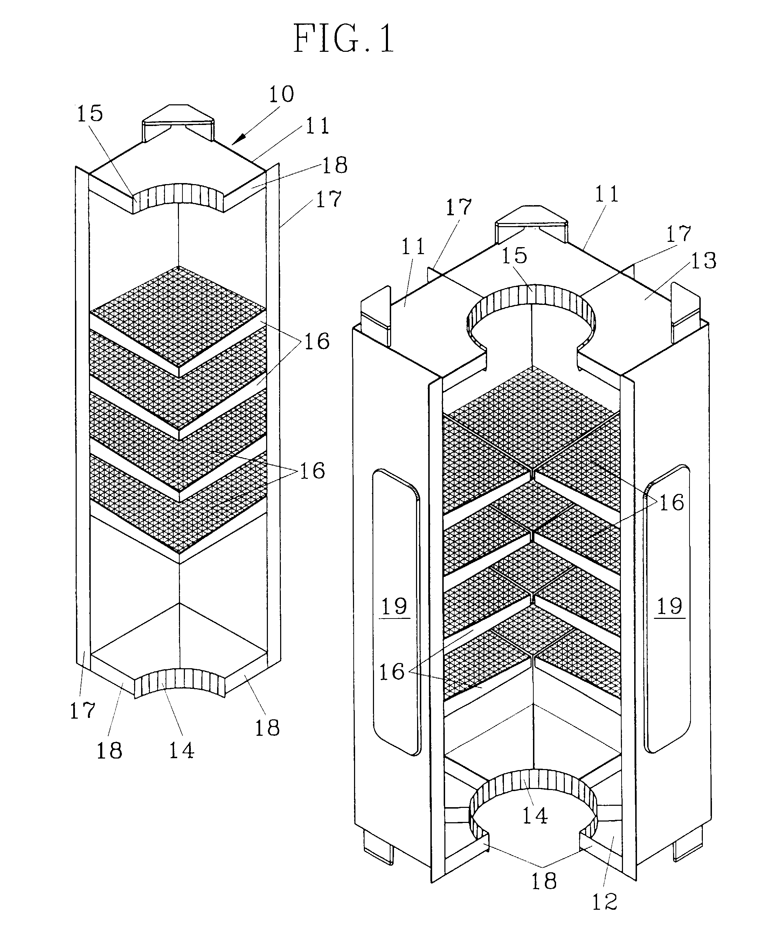

The invention will be described here below with reference to an embodiment shown in the accompanying drawing, a reactor chamber according to the invention is shown in a perspective view during assembly.

### DESCRIPTION OF EMBODIMENTS

The figure shows a reactor chamber according to the invention during assembly, wherein four pre-fabricated sections 10 are assembled. The assembled chamber has an oblong shape with a quadratic section, and is installed vertically, e.g. in a vessel for cleaning exhausts from one or more engines. Other sections than this embodiment, e.g. circular, are also possible and the orientation may also be something else than vertical.

The inner of the chamber shielded from the surroundings by means of side walls 11 and end walls 12, 13. The end wall 12 is provided with a centrally located inlet 14 and the end wall 13 is provided with a centrally located outlet 15. The side walls and the inlet and outlet are oriented symmetrically around a mutual longitudinal axis.

Internally, the chamber is in this embodiment provided with support surfaces 16 in four stairs. The support surfaces 16 comprise grilles which form support for not shown honeycomb elements of a ceramic material, which contribute to reduce for example contents of nitric oxide in the exhausts.

Each side wall 11 is divided into two halves by means of a joint 17, extending in parallel with the longitudinal axis of the chamber. The end walls are also provided with joints 18 extending between the joints 17 of the side walls and the respective inlet 14 and outlet opening 15. The support surfaces 16 are divided in parallel with the end walls 12, 13.

The joints 17, 18 may be welded at the site of installation, or be secured by means of not shown bolts. Alternatively, sheet metal clamps may be used for securing the joints. The side walls 11 are provided with openable hatches 19, through which consumed honeycomb blocks may be taken out and be replaced by new ones.

Because of the partitioning of the reactor chamber according to the invention, the joints 17 form longitudinal stiffening strips on the side walls 11, which prevent that deformations occur because of inner pressure and distortion, during heating of the reactor chamber to about 400 °C. The joints 18 are located at the inside of the chamber and contributes to reinforcing the end walls, so that deformations are avoided also in these parts.

The invention is not limited to the above described embodiment, but several variations are possible within the scope of the accompanying claims. For example, the reactor chamber may be composed of more or less sections than four, and these sections do not have to be identical.

## Claims

1. Method for installing a reactor chamber, for catalytic cleaning of exhaust gases from a combustion plant, at a vessel wherein said reactor chamber is produced from individual sections, the chamber comprises side walls (11) and end walls (12, 13) with inlet- and outlet openings (14, 15) respectively, and support surfaces (16) for blocks of ceramics catalytic material, which support surfaces (16) are oriented across a longitudinal axis extending between the inlet (14) and the outlet (15), wherein adjacent side walls form comers, wherein each side wall (11) is provided with a joint (17) which extends in parallel with said longitudinal axis, and that the end walls (12, 13) are provided with joints (18) extending between the joints (17) of the side walls (11) and the respective inlet and outlet openings (14, 15),
wherein the reactor is transported as sections to the installation site inside the vessel, and the reactor is completed within the vessel by joining said sections at said joints (17,18).

2. A reactor chamber for catalytic cleaning of exhaust gases from a combustion plant, which chamber comprises side walls (11) and end walls (12, 13) with inlet- and outlet openings (14, 15) respectively, and support surfaces (16) for blocks of ceramics catalytic material, which support surfaces (16) are oriented across a longitudinal axis extending between the inlet (14) and the outlet (15), wherein adjacent side walls form corners and the chamber is put together by a number of individual sections (10),
**characterized** in that each side wall (11) is provided with a joint (17) which extends in parallel with said longitudinal axis, and that the end walls (12, 13) are provided with joints (18) extending between the joints of the (17) side walls and the respective inlet and outlet openings (14, 15).

3. A reactor chamber according to claim 2,
**characterized** in that the support surfaces (16) are divided in parallel with the end walls (12, 13).

4. A reactor chamber according to claim 2,
**characterized** in that the sections when assembled, form four quadrants, each having a small section.

5. A reactor chamber according to claim 2,
**characterized** in that the joints (17) of the side walls (11) are located at the outside of the chamber.

6. A reactor chamber according to any one of the preceding claims, **characterized** in that the joints (18) of the end walls (12, 13) are located at the inside of the chamber.

7. A reactor chamber according to claim 2,
**characterized** in that it comprises four individually uniform sections (10).

8. A reactor chamber according to any one of the preceding claims 2- 6,
**characterized** in that the joints (17, 18) are designed as flange joints with holes for bolts.

## Patentansprüche

1. Verfahren zum Einrichten einer Reaktorkammer zum katalytischen Reinigen von Abgasen aus einer Verbrennungsanlage in einem Schiff, wobei die Reaktorkammer aus einzelnen Abschnitten hergestellt ist, die Kammer Seitenwände (11) und Endwände (12, 13) mit Einlass- bzw. Auslassöffnungen (14, 15) umfasst, und Trägerflächen (16) für Blöcke aus keramischem Katalysatormaterial, wobei die Trägerflächen (16) quer einer Längsachse ausgerichtet sind, die sich zwischen dem Einlass (14) und dem Auslass (15) erstreckt, wobei angrenzende Seitenwände Ecken bilden, wobei jede Seitenwand (11) mit einem Verbindungsstück (17) versehen ist, welches sich parallel zu der Längsachse erstreckt, und wobei die Endwände (12, 13) mit Verbindungsstücken (18) versehen sind, die sich zwischen den Verbindungsstücken (17) der Seitenwände und den entsprechenden Einlass- und Auslassöffnungen (14, 15) erstrecken,
wobei der Reaktor abschnittsweise zum Einrichtungsort in das Schiff transportiert wird und der Reaktor innerhalb des Schiffes durch Verbinden der Abschnitte an den Verbindungsstücken (17, 18) fertiggestellt wird.

2. Reaktorkammer zum katalytischen Reinigen von Abgasen aus einer Verbrennungsanlage, wobei die Kammer Seitenwände (11) und Endwände (12, 13) mit Einlass- bzw. Auslassöffnungen (14, 15) umfasst und Trägerflächen (16) für Blöcke aus keramischem Katalysatormaterial, wobei die Trägerflächen (16) quer einer Längsachse ausgerichtet sind, die sich zwischen dem Einlass (14) und dem Auslass (15) erstreckt, wobei angrenzende Seitenwände Ecken bilden, und die Kammer aus einer Zahl von einzelnen Abschnitten (10) zusammengesetzt ist,
dadurch gekennzeichnet, dass
jede Seitenwand (11) mit einem Verbindungsstück (17) versehen ist, welches sich parallel zu der Längsachse erstreckt, und wobei die Endwände (12, 13) mit Verbindungsstücken (18) versehen sind, die sich zwischen den Verbindungsstücken (17) der Seitenwände und den entsprechenden Einlass- und Auslassöffnungen (14, 15) erstrecken.

3. Reaktorkammer nach Anspruch 2,
dadurch gekennzeichnet, dass die Trägerflächen (16) parallel zu den Endwänden (12, 13) geteilt sind.

4. Reaktorkammer nach Anspruch 2,
dadurch gekennzeichnet, dass die Abschnitte, wenn sie zusammen angeordnet sind, vier Quadranten bilden, wobei jeder einen kleinen Abschnitt aufweist.

5. Reaktorkammer nach Anspruch 2,
dadurch gekennzeichnet, dass sich die Verbindungsstücke (17) der Seitenwände (11) außen an der Kammer befinden.

6. Reaktorkammer nach einem der vorhergehenden Ansprüche,
dadurch gekennzeichnet, dass sich die Verbindungsstücke (18) der Endwände (12, 13) innen in der Kammer befinden.

7. Reaktorkammer nach Anspruch 2,
dadurch gekennzeichnet, dass sie vier einzelne gleiche Abschnitte (10) umfasst.

8. Reaktorkammer nach einem der Ansprüche 2 - 6,
dadurch gekennzeichnet, dass die Verbindungsstücke (17, 18) als Flanschverbindung mit Löchern für Bolzen ausgebildet sind.

## Revendications

1. Procédé d'installation d'une chambre de réacteur pour l'épuration catalytique des effluents gazeux d'une installation de combustion, sur un caisson, dans lequel ladite chambre de réacteur est fabriquée à partir de sections individuelles, la chambre comprend des parois latérales (11) et des parois d'extrémité (12, 13) avec des ouvertures d'entrée et de sortie (14, 15) respectivement, et des surfaces de support (16) pour des blocs de matériau catalytique en céramique, lesquelles surfaces de support (16) sont orientées transversalement un axe longitudinal s'étendant entre l'entrée (14) et la sortie (15), dans lequel des parois latérales adjacentes forment des encoignures, dans lequel chaque paroi latérale (11) est munie d'un joint (17) qui s'étend parallèlement audit axe longitudinal, et dans lequel les parois terminales (12, 13) sont munies de joints (18) s'entendant entre les joints (17) des parois (11) latérales et les ouvertures respectives d'entrée et de sortie (14, 15),
dans lequel le réacteur est transporté en sections sur le site d'installation à l'intérieur du caisson, et le réacteur est terminé dans le caisson par la réunion desdites sections au niveau desdits joints (17, 18).

2. Chambre de réacteur pour l'épuration catalytique des effluents gazeux d'une installation de combustion, laquelle chambre comprend des parois latérales (11) et des parois d'extrémité (12, 13) avec des ouvertures d'entrée et de sortie (14, 15) respectivement, et des sufaces de support (16) pour des blocs de matériau catalytique en céramique, lesquelles surfaces de support (16) sont orientées transversalement d'un axe longitudinal s'étendant entre l'entrée (14) et la sortie (15), dans lequel des parois latérales adjacentes forment des encoignures, et la chambre est montée à partir de plusieurs sections individuelles (10), ***caractérisée en ce que*** chaque paroi latérale (11) est munie d'un joint (17) qui s'étend parallèlement audit axe longitudinal, et ***en ce que*** les parois d'extrémité (12, 13) sont munies de joints (18) s'étendant entre les joints (17) des parois latérales et les ouvertures respectives d'entrée et de sortie (14, 15).

3. Chambre de réacteur selon la Revendication 2, ***caractérisée en ce que*** les surfaces de support (16) sont divisées parallèlement aux parois d'extrémité (12, 13).

4. Chambre de réacteur selon la Revendication 2, ***caractérisée en ce que*** les sections, lorsqu'elles sont assemblées, forment quatre quadrants, chacun ayant une petite section.

5. Chambre de réacteur selon la Revendication 2, ***caractérisée en ce que*** les joints (17) des parois latérales (11) sont situés à l'extérieur de la chambre.

6. Chambre de réacteur selon l'une quelconque des Revendications précédentes, ***caractérisée en ce que*** les joints (18) des parois d'extrémité (12, 13) sont situés à l'intérieur de la chambre.

7. Chambre de réacteur selon la Revendication 2, ***caractérisée en ce qu'***elle comprend quatre sections (10) individuellement uniformes.

8. Chambre de réacteur selon l'une quelconque des Revendications précédentes 2 à 6, ***caractérisée en ce que*** les joints (17, 18) sont conçus sous la forme de joints à bride avec des ouvertures pour des boulons.
